# EUROPÄISCHE PATENTSCHRIFT

(11) **EP 1 053 452 B1**
(45) Veröffentlichungstag und Bekanntmachung des Hinweises auf die Patenterteilung: **25.07.2007**
(21) Anmeldenummer: 98965103.9
(22) Anmeldetag: 07.12.1998
(51) Int. Cl.: G01D 11/02, H02K 5/16

(54) **WELLENANTRIEBSVORRICHTUNG**
SHAFT DRIVE
DISPOSITIF DE COMMANDE D'ARBRE

(30) Priorität: 14.02.1998 DE 19806118
(43) Veröffentlichungstag der Anmeldung: 22.11.2000
(73) Patentinhaber: ROBERT BOSCH GMBH, 70442 Stuttgart (DE)
(72) Erfinder: SCHACH, Harald, D-71229 Leonberg (DE); HASPEL, Ulrich, D-74376 Gemmrigheim (DE); UNGERICHT, Guenther, D-72202 Nagold (DE); ERNST, Waldemar, D-71665 Vaihingen (DE)
(86) Internationale Anmeldenummer: PCT/DE1998/003585
(87) Internationale Veröffentlichungsnummer: WO 1999/041571

(56) Entgegenhaltungen:
- EP-A- 0 200 537
- "SURFACE MOUNT COIL GAGE MECHANISM" RESEARCH DISCLOSURE, Nr. 306, 1. Oktober 1989, Seite 732 XP000085429 New York, us

## Beschreibung

### STAND DER TECHNIK

Die vorliegende Erfindung betrifft eine Wellenantriebsvorrichtung, und insbesondere eine Wellenantriebsvorrichtung für den Einsatz in einem Anzeige-/Bedieninstrument bzw. Kombiinstrument eines Kraftfahrzeuges, mit einer Rotoreinrichtung mit einem Rotor und einer daran angebrachten Rotorwelle und einer Statoreinrichtung zum Antreiben des Rotors mit der Rotorwelle.

Obwohl prinzipiell auf beliebige Wellenantriebsvorrichtungen anwendbar, werden die vorliegende Erfindung sowie die ihr zugrundeliegende Problematik in bezug auf eine Wellenantriebsvorrichtung für den Einsatz in einem Anzeige-/ Bedieninstrument bzw. Kombiinstrument eines Kraftfahrzeuges, beispielsweise als Zeiger-Wellenantriebsvorrichtung für den Zeiger eines Anzeigeinstruments, erläutert.

Heutzutage sind eine Vielzahl von Funktionen in einem Anzeige-/Bedieninstrument bzw. Kombiinstrument eines Kraftfahrzeuges vorgesehen. Dabei wird zwar eine Reihe von digitalen Anzeigeinstrumenten benutzt, doch sind aus Zweckmäßigkeitsgründen stets einige Zeigerinstrumente vorhanden, welche eine jeweilige Zeiger-Wellenantriebsvorrichtung benötigen.

Es ist allgemein üblich, solch eine Wellenantriebsvorrichtung, z. B. einen Schrittmotor, als eigenständiges Bauelement auf einer Leiterplatteneinrichtung zu montieren und damit zu kontaktieren. Allerdings ist diese Vorgehensweise fertigungstechnisch aufwendig und benötigt viel Platz zum Einbau.

Die der vorliegenden Erfindung zugrundeliegende Problematik besteht also allgemein darin, eine kostengünstige, platzsparende und leicht einbaubare Wellenantriebsvorrichtung, insbesondere für den Einsatz in einem Anzeige-/Bedieninstrument bzw. Kombiinstrument eines Kraftfahrzeuges, zu schaffen.

Aus dem Research-Disclosure XP 00085429 (Surface Mount Coil Gage Mechanism) ist eine Anzeigevorrichtung bekannt, bei der mittels einer Klammer auf einer ersten Seite einer Trägereinheit ein aus einem Stator und einem Rotator bestehender Elektromotor montiert wird, wobei die erste Seite dem Zeiger zuweist. Aus der EP 200 537 A2 ist ein Elektromotor für die Verwendung in Kassettenrekordern oder Videorekordern beschrieben, bei denen die Drehgeschwindigkeit über eine Spule erfasst wird.

### Vorteile der Erfindung

Die erfindungsgemäße Wellenantriebsvorrichtung mit den Merkmalen des Anspruchs 1 weist den Vorteil auf, dass sie kompakt, insbesondere mit geringer Bauhöhe, und mit einer geringen Anzahl von Bauteilen herstellbar ist. Sie ist leicht zusammenbaubar und einfach, z. B. durch SMD-Technik (=Oberflächenmontagetechnik), kontaktierbar. Alle SMD-Teile sind automatisch bestückbar, was die Fertigung wesentlich vereinfacht.

Die der vorliegenden Erfindung zugrundeliegende Idee besteht darin, daß die Statoreinrichtung und die Rotoreinrichtung derart an der Leiterplatteneinrichtung anbringbar sind, daß die Leiterplatteneinrichtung einen Teil des die Rotorwelle umgebenden Rahmens der Wellenantriebsvorrichtung bildet. Insbesondere ist so eine Integration der axialen Führung bzw. Lagerung der Rotorwelle in die Leiterplatteneinrichtung möglich. Hierdurch bietet sich die Möglichkeit die Wellenantriebsvorrichtung als eigenständige Baugruppe aufzulösen und teilweise in die Leiterplatteneinrichtung zu integrieren.

Gemäß Anspruch 1 weist die Leiterplatteneinrichtung eine Durchführung für die Rotorwelle auf. So ist es möglich, einerseits der Leiterplatteneinrichtung den Zeiger auf der Rotorwelle anzubringen und andererseits den Rotor und die Statoreinrichtung vorzusehen.

In den abhängigen Ansprüchen finden sich vorteilhafte Weiterbildungen und Verbesserungen der in Anspruch 1 angegebenen Wellenantriebsvorrichtung.

Gemäß einer weiteren bevorzugten Weiterbildung ist in der Leiterplatteneinrichtung eine Axiallagerbuchse zum Zusammenwirken mit mindestens einer an der Rotorwelle vorgesehenen Radiallagerwulst vorgesehen.

Gemäß einer weiteren bevorzugten Weiterbildung ist die Axiallagerbuchse einteilig mit der Leiterplatteneinrichtung ausgebildet.

Gemäß einer weiteren bevorzugten Weiterbildung ist die Axiallagerbuchse in einem in der Leiterplatteneinrichtung aufnehmbaren Einsatz ausgebildet. An diesem Einsatz kann die Statoreinrichtung im voraus in geeigneter Orientierung angebracht werden.

Gemäß einer weiteren bevorzugten Weiterbildung ist die Rotorwelle von einer Seite der Leiterplatteneinrichtung bis zu einem Anschlag durch die Leiterplatteneinrichtung durchführbar, wobei der Rotor auf der anderen Seite der Leiterplatteneinrichtung verbleibt. Dies vereinfacht den Einbau der Rotorwelle, da der Anschlag ein Durchrutschen der Rotorwelle verhindert.

Gemäß einer weiteren bevorzugten Weiterbildung ist die Statoreinrichtung auf der Leiterplatteneinrichtung um die Durchführung für den Rotor herum anbringbar.

Gemäß einer weiteren bevorzugten Weiterbildung ist die Statoreinrichtung am Einsatz anbringbar. Beim Einsatz kann es sich um ein präzise gefertigtes kleines Teil handeln, an dem die Statoreinrichtung genau justiert angebracht werden kann.

Gemäß einer weiteren bevorzugten Weiterbildung ist die Anbringungseinrichtung derart gestaltet, daß sie die Rotorwelle auf der anderen Seite der Leiterplatteneinrichtung axial lagert. Damit wird der beim Aufstecken des Zeigers auftretenden Kraft entgegengewirkt.

Gemäß einer weiteren bevorzugten Weiterbildung weist die Anbringungseinrichtung einen auf der anderen Seite der Leiterplatteneinrichtung anbringbaren Deckel auf, welcher eine Axiallagerbuchse zum Aufnehmen des entsprechenden Endes der Rotorwelle aufweist. So lassen sich zwei Funktionen in einem Bauelement vereinen, nämlich eine Lagerfunktion und eine Schutzfunktion.

Gemäß einer weiteren bevorzugten Weiterbildung ist der Dekkel in der Leiterplatteneinrichtung verrastbar. Dies ist eine einfache und robuste Art der Anbringung.

Gemäß einer weiteren bevorzugten Weiterbildung ist die Statoreinrichtung über eine Ausrichteinrichtung, vorzugsweise Zentrierstifte, auf der Leiterplatteneinrichtung ausrichtbar.

Gemäß einer weiteren bevorzugten Weiterbildung ist zwischen dem Rotor und der Statoreinrichtung ein Abstandshalter anbringbar. Dieser Abstandshalter sorgt für eine korrekte Ausrichtung von Rotor und Statoreinrichtung.

Gemäß einer weiteren bevorzugten Weiterbildung ist die Statoreinrichtung durch SMD-Löten oder Kleben auf der Verdrahtung der Leiterplatteneinrichtung anbringbar.

Gemäß einer weiteren bevorzugten Weiterbildung bildet die Statoreinrichtung eine Einheit, welche einen Statorspulenkernbereich, eine darauf befindliche Statorwicklung und einen Statorarmbereich aufweist.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine Querschnittsansicht einer ersten Ausführungsform der erfindungsgemäßen Wellenantriebsvorrichtung in verschiedenen Aufbauzuständen;
- Fig. 2: eine Querschnittsansicht einer zweiten Ausführungsform der erfindungsgemäßen Wellenantriebsvorrichtung in verschiedenen Aufbauzuständen;
- Fig. 3: eine Unteransicht eines ersten Beispiels der an der Leiterplatteneinrichtung angebrachten Statoreinrichtung mit eingesetzter Rotoreinrichtung;
- Fig. 4: eine Unteransicht eines zweiten Beispiels der an der Leiterplatteneinrichtung angebrachten Statoreinrichtung mit eingesetzter Rotoreinrichtung;
- Fig. 5: eine Unteransicht eines dritten Beispiels der an der Leiterplatteneinrichtung angebrachten Statoreinrichtung mit eingesetzter Rotoreinrichtung;
- Fig. 6: eine Unteransicht eines vierten Beispiels der an der Leiterplatteneinrichtung angebrachten Statoreinrichtung mit eingesetzter Rotoreinrichtung; und
- Fig. 7: eine Unteransicht eines fünften Beispiels der an der Leiterplatteneinrichtung angebrachten Statoreinrichtung mit eingesetzter Rotoreinrichtung.

### BESCHREIBUNG DER AUSFÜHRUNGSBEISPIELE

In den Figuren bezeichnen gleiche Bezugszeichen gleiche oder funktionsgleiche Bestandteile.

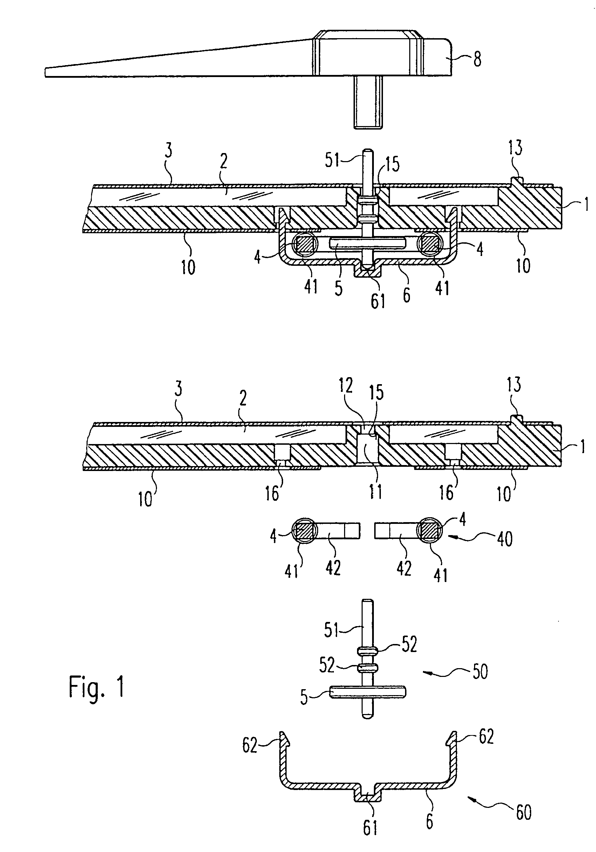

Fig. 1 ist eine Querschnittsansicht einer ersten Ausführungsform der erfindungsgemäßen Wellenantriebsvorrichtung in verschiedenen Aufbauzuständen.

In Fig. 1 bezeichnet 1 eine Leiterplatte, 2 eine Leuchtscheibe, 3 ein Zifferblatt, 40 eine Statoreinrichtung mit einem Statorspulenkernbereich 4, einer Statorwicklung 41 und einem Statorarmbereich 42, 50 eine Rotoreinrichtung mit einem Rotor 5, einer Rotorwelle 51 und einer doppelten Radiallagerwulst 52, 8 einen Zeiger, 10 eine Verdrahtung der Leiterplatteneinrichtung 1, 11 eine Radiallagerbuchse, 12 eine Durchführung für die Rotorwelle 51, 13 eine Halterung für das Zifferblatt 3, 15 einen Anschlag, 16 ein jeweiliges Loch zur Aufnahme einer Rastnase, 60 eine Anbringungseinrichtung mit einem Deckel 6, einer Axiallagerbuchse und einer Rastnase 62 für die Löcher 16.

Die Figur 1 gezeigte erste Ausführungsform zeigt den erfindungsgemäßen Aufbau eines Schrittmotors für ein elektronischen Kombiinstrument als Zeigerantrieb, wobei eine Kontaktierung über die Verdrahtung 10 der Leiterplatteneinrichtung 1 vorgesehen ist. Durch die erfindungsgemäße Teilintegration der Wellenantriebsvorrichtung in die Leiterplatteneinrichtung 1 reduziert sich einerseits die Höhe des Schrittmotors und vereinfacht sich andererseits dessen Montage.

Im folgenden werden die zur Montage der Wellenantriebsvorrichtung gemäß der ersten Ausführungsform notwendigen Schritte näher erläutert.

Auf der Leiterplatteneinrichtung 1 werden die Leuchtscheibe 2 und das Zifferblatt 3 auf der vorderen Seite (Oberseite in Figur 1) angebracht. Weiterhin wird die Statoreinrichtung 40 auf die Rückseite der Leiterplatteneinrichtung 1 montiert, und zwar durch einen SMD-Verbindungsverfahren, wie zum Beispiel Kleben oder Löten.

Dabei ist auf die korrekte Ausrichtung, das heißt den richtigen Abstand zwischen dem Rotor 5 und der Einkoppelfläche des Statorarmbereichs 42 für das Magnetfeld am Rotor 5 zu sorgen. Um diesen Abstand richtig einzustellen, gibt es verschiedene Möglichkeiten. Beim vorliegenden Beispiel wird beim Reflowlöten bzw. Leitkleben der Statoreinrichtung 40 auf die Leiterplatteneinrichtung 1 ein (nicht gezeigter) Montage-Rotor magnetisiert mitgeführt und stellt so während des Montageprozesses den richtigen Abstand sicher. Nach dem Montageprozess wird der Montage-Rotor wieder entfernt.

Nach erfolgter Montage der Statoreinrichtung 40 erfolgt das Einsetzen der Rotoreinrichtung 50 von der Rückseite der Leiterplatteneinrichtung 1 aus, bis die obere Radiallagerwulst 52 am Anschlag 15 am oberen Rand der Radiallagerbuchse 11 anstößt. Hierauf wird die Anbringungseinrichtung 60, welche im vorliegenden Beispiel aus dem Deckel 6 mit der Axiallagerbuchse 61 und der den Rastnasen 62 besteht, auf der Leiterplatteneinrichtung 1 in deren Löchern 16 verrastet bzw. verklipst.

Nach der Montage des Deckels 6 auf der Leiterplatteneinrichtung 1 ist der Zusammenbau des Schrittmotors abgeschlossen, und die montierte Baugruppe stellt den Schrittmotor in seiner bekannten Form dar.

Zur Vervollständigung des Zeigerinstruments wird der Zeiger 8 auf die Rotorwelle 51 von der Vorderseite der Leiterplatteneinrichtung 1 aufgesetzt. Dabei stützt sich die Rotorwelle 51 auf ihrer anderen Seite in der Axiallagerbuchse 61 des Deckels 6 ab.

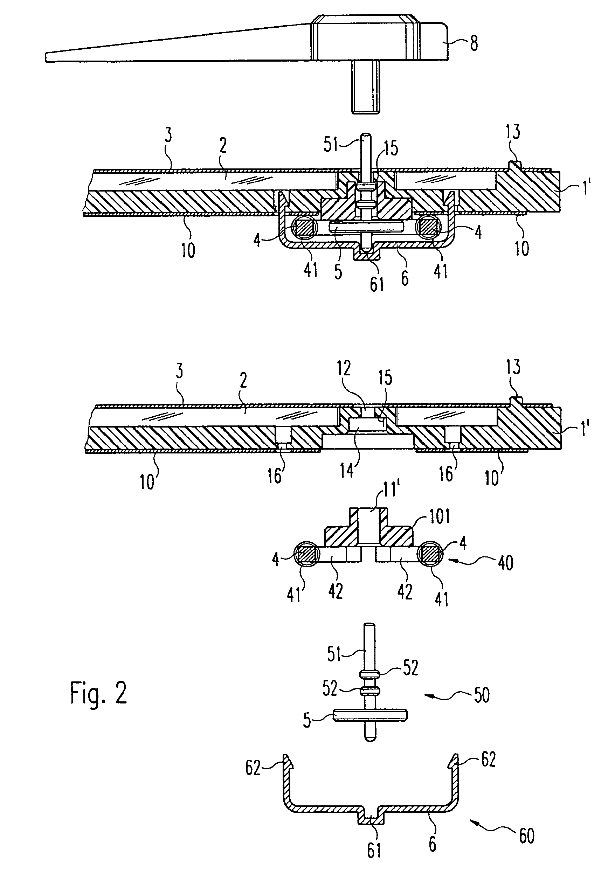

Fig. 2 ist eine Querschnittsansicht einer zweiten Ausführungsform der erfindungsgemäßen Wellenantriebsvorrichtung in verschiedenen Aufbauzuständen.

In Fig. 2 bezeichnen zusätzlich zu den bereits eingeführten Bezugszeichen 1' eine unterschiedlich, d.h. mit einer Aussparung 14, ausgebildete Leiterplatteneinrichtung und 101 einen Einsatz zur Aufnahme in der Aussparung 14.

Bei der in Figur 2 gezeigten zweiten Ausführungsform ist die Axiallagerbuchse 11' in einem in der Aussparung 14 der Leiterplatteneinrichtung 1' aufnehmbaren Einsatz 101 ausgebildet. Die Statoreinrichtung 40, welche eine Einheit bildet, die den Statorspulenkernbereich 4, die darauf befindliche Statorwicklung 41 und den Statorarmbereich 42 aufweist, wird im voraus am Einsatz 101 angebracht worden. Da der Einsatz 101 klein ist, kann er aus einem speziellen, äußerst maßgenauem Kunststoff hergestellt werden, was letzlich die richtige Anordnung auf der Leiterplatteneinrichtung 1' und so den korrekten Abstand zwischen dem Rotor 5 und der Statoreinheit 40 gewährleistet.

Die Verbindung zwischen dem Einsatz 101 und der Leiterplatteneinrichtung 1' erfolgt zweckmäßigerweise form- und kraftschlüssig durch Klemmen oder Kleben o.ä..

Der weitere Aufbau entspricht demjenigen der ersten Ausführungsform nach Figur 1.

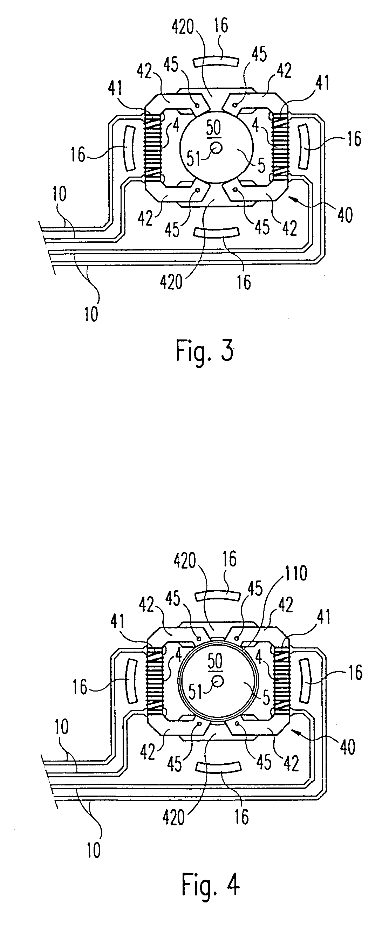

Fig. 3 ist eine Unteransicht eines ersten Beispiels der an der Leiterplatteneinrichtung angebrachten Statoreinrichtung mit eingesetzter Rotoreinrichtung.

In Fig. 3 bezeichnen zusätzlich zu den bereits eingeführten Bezugszeichen 45 eine Ausrichteinrichtung in Form von Zentrierstiften und 420 eine Halterung zum Zusammenhalten der Statoreinrichtung 40.

Bei dem in Figur 3 gezeigten ersten Beispiel der Statoreinrichtung 40 verläuft der Statorarmbeireich 42 im wesentlichen rechtwinklig zum Statorspulenkernbereich 4. Die beiden Hälften der Statoreinrichtung 40 sind über die Halterung 420 verbunden, so daß die gesamte Statoreinrichtung 40 eine Einheit bildet, welche ausgerichtet durch die Zentrierstifte 45 auf der Rückseite der Leiterplatteneinrichtung 1 angebracht ist.

Fig. 4 ist eine Unteransicht eines zweiten Beispiels der an der Leiterplatteneinrichtung angebrachten Statoreinrichtung mit eingesetzter Rotoreinrichtung.

In Fig. 4 bezeichnet zusätzlich zu den bereits eingeführten Bezugszeichen 110 einen Kragen der Leiterplatteneinrichtung 1 (vgl. Fig. 1) bzw. des Einsatzes 101 (vgl. Fig. 2), welcher als Abstandshalter zwischen dem Rotor 5 und der Statoreinrichtung 40 dient.

Bei dem in Figur 4 gezeigten zweiten Beispiel der Statoreinrichtung 40 ist zwischen dem Rotor 5 und der Stotoreinrichtung 40, das heißt in dem Bereich der Einkoppelfläche, der Abstandshalter 110 angebracht, der zweckmäßigerweise ein dünner Kunststoffring ist, an dem die Statoreinrichtung 40 mit der Einkoppelfläche im Federprinzip quasi toleranzfrei anliegt. Die Dicke des Abstandshalters 110 ist also derart gewählt, daß der Rotor 5 sich ohne großen Reibungswiderstand drehen kann.

Ansonsten gleicht dieses zweite Beispiel dem im Zusammenhang mit Figur 3 erwähnten ersten Beispiel der Statoreinrichtung 40.

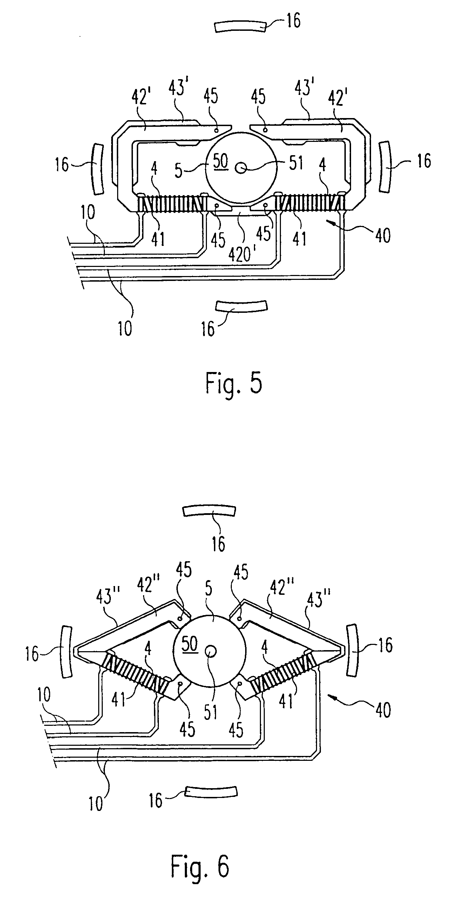

Fig. 5 ist eine Unteransicht eines dritten Beispiels der an der Leiterplatteneinrichtung angebrachten Statoreinrichtung mit eingesetzter Rotoreinrichtung.

In Fig. 5 bezeichnet zusätzlich zu den bereits eingeführten Bezugszeichen 42' einen modifizierten Statorarmbereich, 43' eine Einpassung für den modifizierten Statorarmbereich 43' und 420' eine entsprechend modifizierte Halterung.

Beim in Figur 5 gezeigten dritten Beispiel der Statoreinrichtung 40 sind die beiden Hälften der Statoreinrichtung 40 U-förmig, jedoch befinden sich die Statorwicklungen 41 jeweils in einem, das heißt dem in Figur 5 unteren, Schenkel der U-Form. Weiterhin gibt es nur eine Halterung 420' zum Zusammenhalten der beiden Hälften der Statoreinrichtung 40. Auf der Rückseite der Leiterplatteneinrichtung 1 sind zusätzlich Einpassungen 43' zur Aufnahme des Statorarmbereichs 42' vorgesehen.

Fig. 6 ist eine Unteransicht eines vierten Beispiels der an der Leiterplatteneinrichtung angebrachten Statoreinrichtung mit eingesetzter Rotoreinrichtung.

In Fig. 6 bezeichnet zusätzlich zu den bereits eingeführten Bezugszeichen 42" einen modifizierten Statorarmbereich und 43*"* eine Einpassung für den modifizierten Statorarmbereich 43*''*.

Beim in Figur 6 gezeigten vierten Beispiel der Statoreinrichtung 40 sind die beiden Hälften der Statoreinrichtung 40 V-förmig, wobei an jeweils einem Schenkel der V-Form die Statorwicklung 41 vorgesehen ist. Bei diesem Beispiel sind die beiden Hälften der Statoreinrichtung 40 nicht miteinander verbunden, sondern jeweils in die entsprechende Einpassung 43" der Leiterplatteneinrichtung 1 eingepaßt, wobei die Zentrierstifte 45 wie in den obigen Fällen für die korrekte Ausrichtung sorgen.

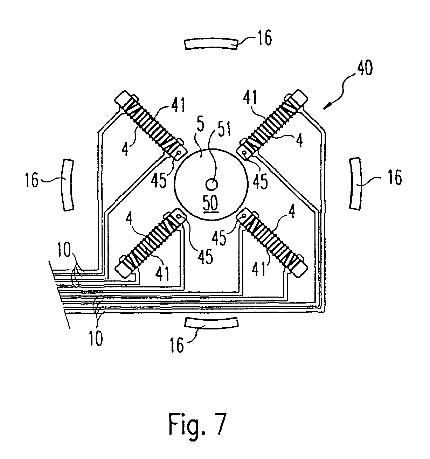

Fig. 7 ist eine Unteransicht eines fünften Beispiels der an der Leiterplatteneinrichtung angebrachten Statoreinrichtung mit eingesetzter Rotoreinrichtung.

Bei dem in Figur 7 gezeigten fünften Beispiel der Statoreinrichtung 40 sind vier Statorspulenkernbereiche 4 mit einer entsprechenden Statorwicklung 41 vorgesehen, welche unter einem Winkel von 90° zueinander angeordnet sind und nicht miteinander zusammenhängen, sondern einzeln auf der Rückseite der Leiterplatteneinrichtung 1 angebracht sind.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere kann die Form der Statoreinrichtung 40 im wesentlichen beliebig variiert werden. Weiterhin ist es möglich, die Verbindung zwischen Statoreinrichtung 40 und der Leiterplatteneinrichtung 1 auf andere Weise als durch SMD-Technik zu realisieren. Schließlich kann auch der Zeiger 8 auf der anderen Seite der Rotorwelle 51 angebracht werden, wobei in diesem Fall der Anschlag 15 als Axiallager wirkt. Außerdem kann die Radiallagerbuchse auch auf der Ober- oder Unterseite der Leiterplatteneinrichtung 1 angebracht sein.

## Patentansprüche

1. Wellenantriebsvorrichtung für einen Zeiger (8) eines Anzeigeinstrumentes mit einer Rotoreinrichtung (50, 5, 51) mit einem Rotor (5) und einer daran angebrachten Rotorwelle (51) und einer Statoreinrichtung (40) zum Antreiben des Rotors (5) mit der Rotorwelle (51),
**gekennzeichnet durch** eine Leiterplatteneinrichtung (1, 1'), wobei an der Leiterplatteneinrichtung ein Zifferblatt (3) angeordnet ist, und eine Anbringungseinrichtung (60) zum derartigen Anbringen der Rotoreinrichtung (50; 5, 51) und der Statoreinrichtung (40) an der Leiterplatteneinrichtung (1, 1'), dass die Leiterplatteneinrichtung (1, 1') einen Teil des die Rotorwelle (51) umgebenden Rahmens der Wellenantriebsvorrichtung bildet, wobei die Leiterplatteneinrichtung (1, 1') eine Durchführung (12) für die Rotorwelle (51) aufweist und wobei der Rotor (5) und die Statoreinrichtung (40) auf einer dem Zeiger (8) abgewandten Seite der Leiterplatteneinrichtung (1, 1') angeordnet sind.

2. Wellenantriebsvorrichtung nach Anspruch 1, **dadurch gekennzeichnet, dass** in der Leiterplatteneinrichtung (1, 1') eine Axiallagerbuchse (11, 11') zum Zusammenwirken mit mindestens einer an der Rotorwelle (51) vorgesehenen Radiallagerwulst (52) vorgesehen ist.

3. Wellenantriebsvorrichtung nach Anspruch 2, **dadurch gekennzeichnet, daß** die Axiallagerbuchse (11) einteilig mit der Leiterplatteneinrichtung (1, 1') ausgebildet ist.

4. Wellenantriebsvorrichtung nach Anspruch 2, **dadurch gekennzeichnet, daß** die Axiallagerbuchse (11') in einem in der Leiterplatteneinrichtung (1, 1') aufnehmbaren Einsatz (101) ausgebildet ist.

5. Wellenantriebsvorrichtung nach einem der Ansprüche 1 bis 4, **dadurch gekennzeichnet, daß** die Rotorwelle (51) von einer Seite der Leiterplatteneinrichtung (1, 1') bis zu einem Anschlag (15) durch die Leiterplatteneinrichtung (1, 1') durchführbar ist, wobei der Rotor (5) auf der anderen Seite der Leiterplatteneinrichtung (1, 1') verbleibt.

6. Wellenantriebsvorrichtung nach einem der Ansprüche 1 bis 5, **dadurch gekennzeichnet, daß** die Statoreinrichtung (40) auf der Leiterplatteneinrichtung (1, 1') um die Durchführung für den Rotor (5) herum anbringbar ist.

7. Wellenantriebsvorrichtung nach einem der Ansprüche 4 bis 6, **dadurch gekennzeichnet, daß** die Statoreinrichtung (40) am Einsatz (101) anbringbar ist.

8. Wellenantriebsvorrichtung nach Anspruch 7, **dadurch gekennzeichnet, daß** die Anbringungseinrichtung (60) derart gestaltet ist, daß sie die Rotorwelle (51) auf der anderen Seite der Leiterplatteneinrichtung (1, 1') axial lagert.

9. Wellenantriebsvorrichtung nach Anspruch 8, **dadurch gekennzeichnet, daß** die Anbringungseinrichtung (60) einen auf der anderen Seite der Leiterplatteneinrichtung (1, 1') anbringbaren Deckel (6) aufweist, welcher eine Axiallagerbuchse (61) zum Aufnehmen des entsprechenden Endes der Rotorwelle (51) aufweist.

10. Wellenantriebsvorrichtung nach Anspruch 9 , **dadurch gekennzeichnet, daß** der Deckel (6) in der Leiterplatteneinrichtung (1, 1') verrastbar ist.

11. Wellenantriebsvorrichtung nach einem der Ansprüche 7 bis 10, **dadurch gekennzeichnet, daß** die Statoreinrichtung (40) über eine Ausrichteinrichtung (45), vorzugsweise Zentrierstifte, auf der Leiterplatteneinrichtung (1, 1') ausrichtbar ist.

12. Wellenantriebsvorrichtung nach einem der vorhergehenden Ansprüche, **dadurch gekennzeichnet, daß** zwischen dem Rotor (5) und der Statoreinrichtung (40) ein Abstandshal ter (110) anbringbar ist.

13. Wellenantriebsvorrichtung nach einem der vorhergehenden Ansprüche, **dadurch gekennzeichnet, daß** die Statore inrichtung (40) durch SMD-Löten oder Kleben auf der Verdrahtung (10) der Leiterplatteneinrichtung (1, 1') anbringbar ist.

14. Wellenantriebsvorrichtung nach einem der vorhergehenden Ansprüche, **dadurch gekennzeichnet, daß** die Statoreinrichtung (40) eine Einheit bildet, welche einen Statorspulenkernbereich (4), eine darauf befindliche Statorwicklung (41) und einen Statorarmbereich (42) aufweist.

## Claims

1. Shaft drive apparatus for a pointer (8) of a display instrument, having a rotor device (50, 5, 51) with a rotor (5) and a rotor shaft (51), which is attached to the said rotor, and a stator device (40) for driving the rotor (5) with the rotor shaft (51),
**characterized by** a printed circuit board device (1, 1'), with a dial (3) being arranged on the printed circuit board device, and an attachment device (60) for attaching the rotor device (50; 5, 51) and the stator device (40) to the printed circuit board device (1, 1') in such a way that the printed circuit board device (1, 1') forms part of the frame, which surrounds the rotor shaft (51), of the shaft drive apparatus, with the printed circuit board device (1, 1') having a leadthrough (12) for the rotor shaft (51), and with the rotor (5) and the stator device (40) being arranged on a side of the printed circuit board device (1, 1') which faces away from the pointer (8).

2. Shaft drive apparatus according to Claim 1, **characterized in that** an axial bearing bushing (11, 11') for interacting with at least one radial bearing bead (52), which is provided on the rotor shaft (51), is provided in the printed circuit board device (1, 1').

3. Shaft drive apparatus according to Claim 2, **characterized in that** the axial bearing bushing (11) is integrally formed with the printed circuit board device (1, 1').

4. Shaft drive apparatus according to Claim 2, **characterized in that** the axial bearing bushing (11') is formed in an insert (101) which can be accommodated in the printed circuit board device (1, 1').

5. Shaft drive apparatus according to one of Claims 1 to 4, **characterized in that** the rotor shaft (51) can be led through the printed circuit board device (1, 1') from one side of the printed circuit board device (1, 1') as far as a stop (15), with the rotor (5) remaining on the other side of the printed circuit board device (1, 1').

6. Shaft drive apparatus according to one of Claims 1 to 5, **characterized in that** the stator device (40) can be fitted on the printed circuit board device (1, 1') around the leadthrough for the rotor (5).

7. Shaft drive apparatus according to one of Claims 4 to 6, **characterized in that** the stator device (40) can be attached to the insert (101).

8. Shaft drive apparatus according to Claim 7, **characterized in that** the attachment device (60) is configured in such a way that it axially mounts the rotor shaft (51) on the other side of the printed circuit board device (1, 1').

9. Shaft drive apparatus according to Claim 8, **characterized in that** the attachment device (60) has a cover (6) which can be fitted on the other side of the printed circuit board device (1, 1') and has an axial bearing bushing (61) for accommodating the corresponding end of the rotor shaft (51).

10. Shaft drive apparatus according to Claim 9, **characterized in that** the cover (6) can be locked in the printed circuit board device (1, 1').

11. Shaft drive apparatus according to one of Claims 7 to 10, **characterized in that** the stator device (40) can be oriented by means of an orientation device (45), preferably centring pins, on the printed circuit board device (1, 1').

12. Shaft drive apparatus according to one of the preceding claims, **characterized in that** a spacer (110) can be provided between the rotor (5) and the stator device (40).

13. Shaft drive apparatus according to one of the preceding claims, **characterized in that** the stator device (40) can be connected to the wiring (10) of the printed circuit board device (1, 1') by SMD soldering or adhesive bonding.

14. Shaft drive apparatus according to one of the preceding claims, **characterized in that** the stator device (40) forms a unit which has a stator coil core region (4), a stator winding (41) which is located thereon, and a stator arm region (42).

## Revendications

1. Dispositif de commande d'arbre pour une aiguille (8) d'un instrument indicateur, qui comprend un dispositif de rotor (50, 5, 51) ayant un rotor (5) comportant un arbre de rotor (51), ainsi qu'un dispositif de stator (40) pour entraîner le rotor (5) et son arbre (51),
**caractérisé en ce qu'**
il comporte un dispositif à circuit imprimé (1, 1') sur lequel est montée une feuille à chiffres (3), ainsi qu'un dispositif de montage (60) pour monter le dispositif de rotor (50, 5, 51) et le dispositif de stator (40) sur le dispositif à circuit imprimé (1, 1'), de manière que ce dernier constitue une partie du cadre du dispositif de commande d'arbre entourant l'arbre de rotor (51), le dispositif à circuit imprimé (1, 1') présentant un passage (12) pour l'arbre de rotor (51), et le rotor (5) ainsi que le dispositif de stator (41) étant disposés du côté du dispositif à circuit imprimé (1, 1') éloigné de l'aiguille (8).

2. Dispositif de commande d'arbre selon la revendication 1,
**caractérisé en ce que**
le dispositif à circuit imprimé (1,1') comporte une douille de palier axial (11, 11') pour coopérer avec au moins un bourrelet de palier radial (52) prévu sur l'arbre de rotor (51).

3. Dispositif de commande d'arbre selon la revendication 2,
**caractérisé en ce que**
la douille de palier axial (11) est monobloc avec le dispositif à circuit imprimé (1, 1').

4. Dispositif de commande d'arbre selon la revendication 2,
**caractérisé en ce que**
la douille de palier axiale (11') est réalisée dans une pièce rapportée (101) pouvant se loger dans le dispositif à circuit imprimé (1, 1').

5. Dispositif de commande d'arbre selon une des revendications 1 à 4,
**caractérisé en ce que**
l'arbre de rotor (51) peut traverser le dispositif à circuit imprimé (1, 1') en partant d'un côté de celui-ci jusqu'à venir en contact avec une butée (15), le rotor (5) restant sur l'autre côté du dispositif à circuit imprimé (1, 1').

6. Dispositif de commande d'arbre selon une des revendications 1 à 5,
**caractérisé en ce que**
le dispositif de stator (40) peut être monté sur le dispositif à circuit imprimé (1, 1') autour du passage prévu pour le rotor (5).

7. Dispositif de commande d'arbre selon une des revendications 4 à 6,
**caractérisé en ce que**
le dispositif de stator (40) peut être monté sur la pièce rapportée (101).

8. Dispositif de commande d'arbre selon la revendication 7,
**caractérisé en ce que**
le dispositif de montage (60) est constitué de manière à constituer un palier axial pour l'arbre de rotor (51) sur l'autre côté du dispositif à circuit imprimé (1, 1').

9. Dispositif de commande d'arbre selon la revendication 8,
**caractérisé en ce que**
le dispositif de montage (60) présente un couvercle (6) qui peut être placé sur l'autre côté du dispositif à circuit imprimé (1, 1') et qui comprend une douille de palier axiale (61) pour accueillir l'extrémité correspondante de l'arbre de rotor (51).

10. Dispositif de commande d'arbre selon la revendication 9,
**caractérisé en ce que**
le couvercle (6) peut être bloqué dans le dispositif à circuit imprimé (1, 1').

11. Dispositif de commande d'arbre selon une des revendications 7 à 10,
**caractérisé en ce que**
le dispositif de stator (40) peut être positionné sur le dispositif à circuit imprimé (1, 1') par un dispositif d'orientation (45), constitué de préférence par des broches de centrage.

12. Dispositif de commande d'arbre selon une des revendications précédentes,
**caractérisé en ce que**
un espaceur (110) peut être placé entre le rotor (5) et le dispositif de stator (40).

13. Dispositif de commande d'arbre selon une des revendications précédentes,
**caractérisé en ce que**
le dispositif de stator peut être fixé sur le câblage (10) du dispositif à circuit imprimé (1, 1') par brasure de composant monté en surface (SMD) ou par collage.

14. Dispositif de commande d'arbre selon une des revendications précédentes,
**caractérisé en ce que**
le dispositif de stator (40) constitue une unité comprenant une zone de noyau de bobine de stator (4), un enroulement de stator (41) placé sur cette zone et une zone de bras de stator (42).
